# EUROPEAN PATENT APPLICATION

(11) **EP 3 088 903 A1**
(43) Date of publication of application: **02.11.2016**
(21) Application number: 16167708.3
(22) Date of filing: 29.04.2016
(51) Int. Cl.: G01N 35/04

(54) **INTELLIGENT RACK**

(30) Priority: 29.04.2015 LU 92703
(71) Applicant: Stratec Biomedical AG, 75217 Birkenfeld-Graefenhausen (DE)
(72) Inventor: Trump, Martin, 75217 Birkenfeld (DE); Habrich, Stephan, 75217 Birkenfeld (DE); Zver, Martin, 75217 Birkenfeld (DE)
(74) Representative: Tegethoff, Sebastian

(57) **Abstract**

The field of the invention relates to a rack for automated analyzer systems. The instant invention provides a rack for automated analyzer systems, the rack comprising at least one position for taking up at least one cartridge; at least one drive for agitating the content of the at least one cartridge; at least one RFID antenna for reading RFID tags of the at least one cartridge and at least one printed circuit board for operating the drive, e.g. a motor.

## Description

### Field of the invention

The field of the invention relates to a rack for automated analyzer systems.

### Background of the invention

Automatic analyzer systems in clinical diagnostics have to be supplied with different liquids to run biochemical processes and/ or have to be loaded with operating fluids for integrated technical devices.

Currently analyzer systems use either individual bottles or cartridges. Individual bottles are inserted in racks, which are then placed into a reagent or sample-loading bay. Sample-loading bays are often cooled. Agitation for some contents to keep particles in suspension can be provided by some mechanical interface. On common instruments this mechanical interface is an oscillating gear rack or a gear wheel. This mechanical interface interacts with a gear on the rack, providing rotational movement to the reagent bottle or reagent container.

Reagent cartridges combine several reagents into one container that has corresponding cavities. The cartridges are either placed directly into the reagent bay or via cartridge carriers. One or more inserted separate containers in the cartridge can be rotated for agitation. Cartridges offer a better reagent to space ratio than individual bottles.

The existing reagent containers or cartridges cannot be agitated separately and are limited in respect to the width and the agitation interface.

Agitation can only be used for all racks in a reagent bay simultaneously. If agitation needs to be stopped before pipetting, agitation is stopped for all racks during pipetting of one reagent. Thus, there is a need for cartridges, which can be agitated separately.

Existing systems use bar code readers to identify rack and reagent type. Alternatively they use RFID antennas for reading out information. These antennas have to be placed very close to the respective tag, which causes additional efforts in protection against humidity. Optical systems like bar code readers or cameras are sensitive against condensation, e.g. in cooled systems or contamination with particles.

The design of a loading bay is rather complex because of the need for agitation mechanism and agitation rack interface. Since a reagent bay is usually cooled, condensed water has to be taken into account.

### Object of the invention

It is an object of the invention to provide a rack for automated analyser systems which provides more flexibility as regards agiation and identification of samples.

### Summary of the invention

The instant invention provides a rack for automated analyzer systems, the rack comprising at least one position for taking up at least one cartridge; at least one drive for agitating the content of the at least one cartridge; at least one RFID antenna for reading RFID tags of the at least one cartridge and at least one printed circuit board for operating the drive, e.g. a motor.

The at least one cartridge may comprise at least one container or bottle.

It is intended that at least one cartridge can comprise at least one stationary and/or movable container or bottle.

The at least one drive and the at least one cartridge can be connected by means for agitating the at least one cartridge or the at least one container or bottle. A gear drive is one possible embodiment for such a connection.

The at least one container or bottle of the at least one cartridge may be connected to at least one neighboring container to transfer its agitation. A row of gear drives may represent such a connection to transfer rotation from the drive.

The rack may comprise induction coils to transfer power to the drive and to enable communication with the automated system for operation of the rack.

The rack may further or alternatively comprise electrical contacts to transfer power and to enable communication with the automated system.

The at least one cartridge may comprise 2D codes for identification.

The rack may further comprise a LED to indicate the status of the rack to a user for instance.

The rack may comprise a power source for powering the at least one drive.

The at least one drive and the at least one cartridge or the at least one container or bottle may be connected by gear-wheels for agitation of the at least one cartridge.

The rack may have pullout leg supports so that the rack is able to stand alone outside the automated analyzer system

### Summary of the figures

The invention will now be described on the basis of figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention. It shows:
Figure 1 Schematic overview of a rack with inserted cartridges
Figure 2 Schematic overview of loading bays with inserted racks
Figure 3 Top view onto a rack
Figure 4 A: Schematic depiction of drive; B: Sectional view through A

### Detailed description of the invention

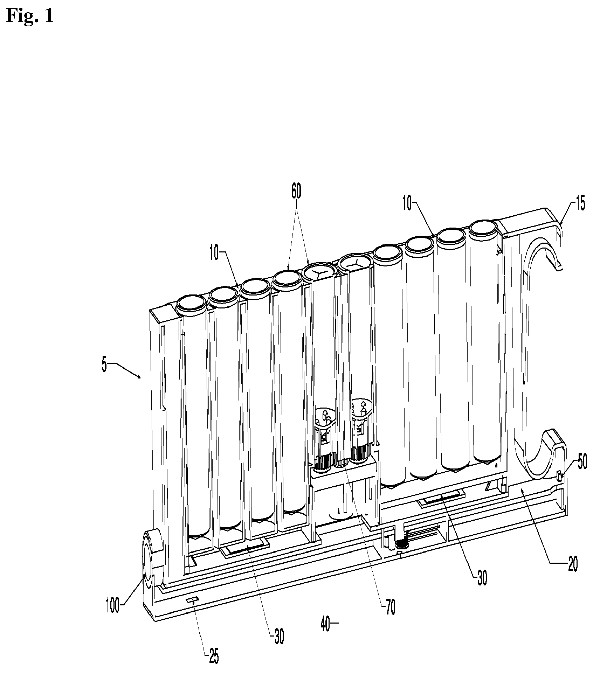

The invention provides a new intelligent rack 5 that accepts disposable cartridges 10 with any kind of content therein. The cartridges 10 may only provide one volume or can be separated to provide separate volumes for different kinds of content. Figure 1 shows on the right part of the rack 5 a cartridge 10 that is separated to have two parts for taking up content.

A rack within the meaning of the instant invention shall be understood as a framework into that cartridges or bottles may be placed. A rack can be put into an automated analyser system carrying cartridges or bottles with samples or buffer.

The intelligent rack 5 features a build in PCB 20, which carries RFID antennas for identification of inserted cartridges by reading out RFID tags 30, which are connected to the respective cartridge as well as a status LED.

The rack 5 has a build in motor 40, which provides agitation to at least one movable cartridge 10 or container or bottle of a cartridge 10. The PCB 20 has an induction coil, which provides power to the rack 5, when inserted into the reagent-loading bay. The reagent loading bay may feature corresponding induction coils to provide power to the racks 5. Information about the content of a cartridge 10, container or bottle of a cartridge 10 can be transmitted through the coils between the rack 5 and the analyzer system. It is an advantage that a rack 5 of the present disclosure enables individual agitation and further allows for different reagent specific agitation profiles without the need that the system provides a drive for agitation. The motor of a rack according to the instant invention is used for agitation of the content of a cartridge or bottle, but is not used for moving the rack or cartridges or bottles placed into the rack within the automated analyzer system.

Figure 1 shows an embodiment of a new intelligent rack 5 with a rack handle 15. One or more cartridges 10 (the figure shows a design for up to two cartridges10) can be inserted into the rack 5. Each cartridge 10 may have a RFID tag 30 containing information about the content of the respective cartridge. An antenna on the rack PCB 20 can read out the RFID tag. A recess 25 located at the bottom side can be used for locking the rack in the loading bay by a hook (not shown) engaging into the recess.

A processor on the PCB 20 further controls the agitation motor 40, the status LED 50 and processes reagent data. The PCB 20 communicates with the instrument electronics via an induction coil, which may also provide power to the rack. An identification of the content of cartridge 10, comprised container or bottles can also be achieved by using barcodes on the cartridge 10.

The cartridge 10 on the left side of the rack shown in figure 1 comprises 4 stationary container or bottles 60. The most right stationary container or bottle 60 is connected via gear wheel 70 with the motor or drive 40.

A rack 5 may have an interface 100 to communicate or exchange data with the automated analyzer system. The counterpart of the interface is located within the loading bay.

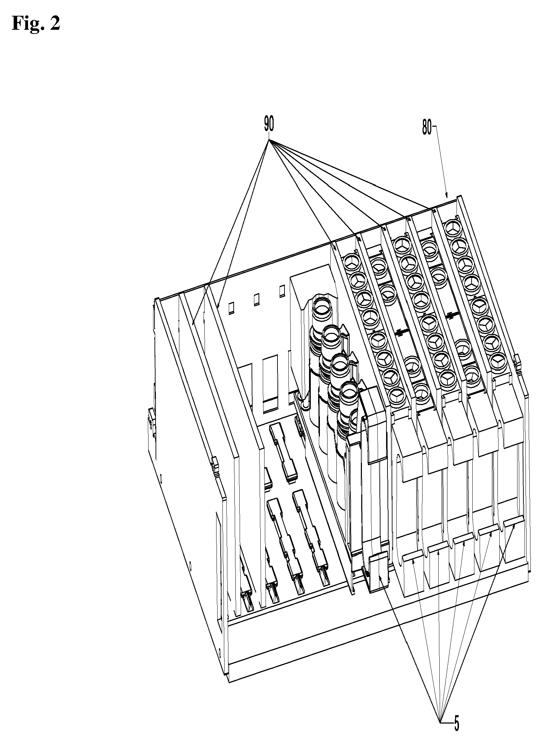

Figure 2 shows lanes 80 of a loading bay comprising on the right side intelligent racks of the instant disclosure as well as an already known reagent racks. The lanes 80 do not need means for agitation, because they are integrated into the intelligent racks of the instant disclosure.

Fins 90 separate the loading bay into lanes and the fins 90 may provide cooling of the cartridges 10 and their content. In case wider racks 5 are necessary, the fins 90 can be removed accordingly. This results in more flexibility for using a variety of racks and container with different sizes and shapes.

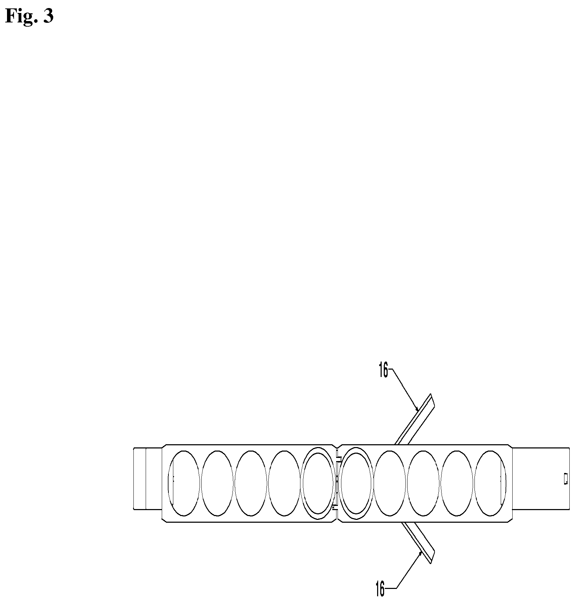

Figure 3 shows a top view onto a rack of the instant disclosure showing the pullout leg supports 16 so that the rack can be safely placed onto a surface outside of the analyzer system without the danger of tipping over.

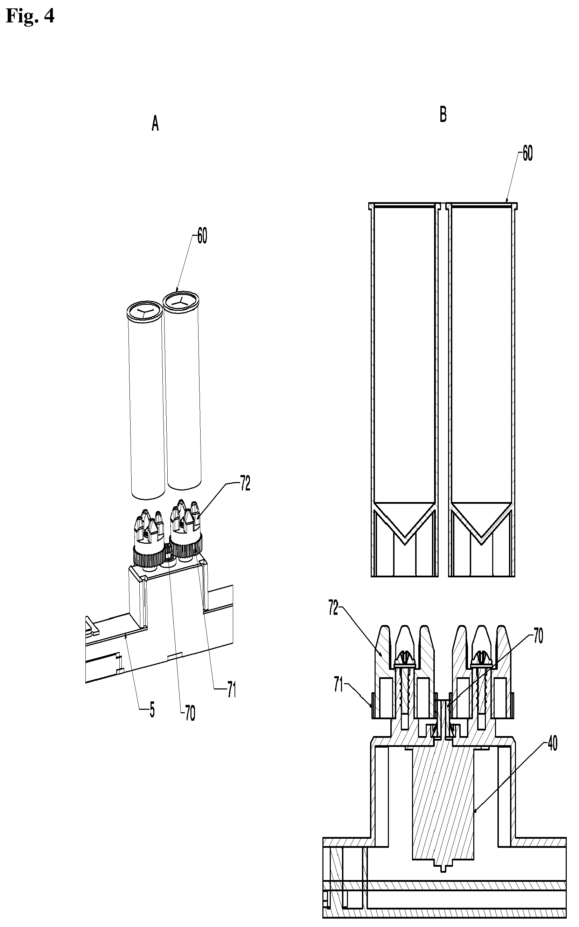

Figure 4 shows in A on the left side an overview of the drive for agitating stationary bottles or container and in B on the right side a sectional view through the overview. Gear wheel 70 is mounted directly onto the motor shaft of motor 40 and engages into outer gear wheels 71. The outer gear wheels have on their upper side driver pins 72, which engage into the bottom side of stationary bottles or container 60 that are placed onto it and thus agitate the stationary bottles or container 60.

The use of an intelligent rack according to the instant disclosure facilitates also the design of a loading bay and allows using racks of different width, wherein agitation of a rack is independent from the loading bay. Different sized containers or bottles can be supported within racks of a different width. The resulting high degree of flexibility for all kinds of substances is one advantage of the subject matter of the present invention.

Racks according to the instant disclosure may be retrofitted even on already delivered instruments to allow for the use of cartridges according to the instant disclosure.

The use of stationary coils and corresponding coils integrated into the rack allows for replacing moving parts for agitation in a loading bay. Thus, the reliability of a loading bay is improved. In case that a rack breaks, the user can replace such a rack without the help of field service engineering.

A further advantage of a rack according to the instant disclosure is that the rack is able to recognize the content of a cartridge, which is placed onto the racks and can thus adapt for instance the agitation profile.

It is further possible that cartridges which are inserted for the first time in a rack can be treated differently than during long term storage e.g. with more aggressive agitation for initial suspension of the content like settled particles or beads.

A system using cartridges of the instant disclosure offers the possibility that agitation can be stopped rack wise rather than per loading bay, e.g. for pipettor access to a particular reagent.

In addition, turning off agitation of individual racks may reduce noise generated from the agitation mechanism and reduces power consumption, in case that the particular rack is no longer needed for scheduled sample tests. Turning off agitation entirely due to the increased suspension capabilities of a rack of the instant disclosure can also reduce standby noise.

LED indicators on the intelligent rack provide direct feed back to the user about the rack status e.g. in use, not in use - removable or not removable etc.

A rack of the instant disclosure does not need a battery or electrical contacts due to the proposed use of induction coils. Thus, mechanical wear has no longer to be taken into account.

### Reference Number List

- 5: rack
- 10: cartridge
- 15: rack handle
- 16: leg support
- 20: PCB
- 25: recess
- 30: RFID tag
- 40: motor
- 50: status LED
- 60: stationary container or bottles
- 70: gear wheel
- 71: outer gear wheel
- 72: driver pin
- 80: lanes
- 90: fin
- 100: interface

## Claims

1. A rack for automated analyzer systems, the rack comprising:
- at least one position for taking up at least one cartridge;
- at least one drive for agitating the content of the at least one cartridge;
- at least one RFID antenna for reading RFID tags of the at least one cartridge and
- at least one printed circuit board for operating the drive.

2. The rack of claim 1, wherein the at least one cartridge comprises at least one container or bottle.

3. The rack of claim 1 or 2, wherein the at least one cartridge comprises stationary and/or movable container.

4. The rack of one of claims 1 to 3, wherein the at least one drive and the at least one cartridge are connected by means for agitating the at least one cartridge or the at least one container.

5. The rack of claim 4, wherein the at least one container of the at least one cartridge is connected to at least one neighboring container to transfer its agitation.

6. The rack of any one of claims 1 to 5, wherein the rack comprises induction coils to transfer power and communicate with the automated system.

7. The rack of any one of claims 1 to 6, wherein the rack comprises electrical contacts to transfer power and communicate with the automated system

8. The rack of any one of claims 1 to 7, wherein the at least one cartridge comprises barcodes or 2D-codes for identification.

9. The rack of any one of claims 1 to 8, wherein the rack comprises a LED indicating the status of the rack to a user.

10. The rack of one of claims 1 to 9, comprising a power source for powering the at least one drive.

11. The rack of one of claims 1 to 8, wherein the at least one drive and the at least one cartridge or the at least one container are connected by gear-wheels for agitation of the at least one cartridge.

12. The rack of one of claims 1 to 11, wherein the rack has pullout leg supports so that the rack is able to stand alone outside the automated analyzer system.
